# EUROPEAN PATENT APPLICATION

(11) **EP 4 507 084 A1**
(43) Date of publication of application: **12.02.2025**
(21) Application number: 22965584.0
(22) Date of filing: 18.11.2022
(51) Int. Cl.: H01M 50/183

(54) **HOUSING ASSEMBLY OF BATTERY CELL, BATTERY CELL, BATTERY, AND ELECTRICAL DEVICE**

(71) Applicant: Contemporary Amperex Technology Co., Limited, Ningde, Fujian 352100 (CN)
(72) Inventor: MENG, Hao, Ningde, Fujian 352100 (CN); ZHU, Wenqi, Ningde, Fujian 352100 (CN); LI, Meng, Ningde, Fujian 352100 (CN); WEN, Yuqian, Ningde, Fujian 352100 (CN)
(74) Representative: Behr, Wolfgang
(86) International application number: PCT/CN2022/132966
(87) International publication number: WO 2024/103404

(57) **Abstract**

Provided are a housing assembly for a battery cell, a battery cell, a battery, and an electrical device, which belong to the field of battery cell technologies. The housing assembly for the battery cell includes a housing body and housing cover. The housing body has an opening. The housing cover is arranged at the opening. Each of the housing cover and the housing body has a rough region on surfaces of the housing cover and the housing body fiting each other.

## Description

### FIELD

The present disclosure relates to the technical field of batteries, and more particularly, to a housing assembly for a battery cell, a battery cell, a battery, and an electrical device.

### BACKGROUND

In recent years, new energy vehicles have developed by leaps and bounds. In the field of electric vehicles, power batteries, as the power source of electric vehicles, play an important and irreplaceable role. A battery consists of a case and a plurality of batteries in the case. Batteries, as the core components of the new energy vehicles, have high requirements in terms of safety and service life. However, a housing of a battery cell in the battery has weak pressure resistance, and a large amount of heat is generated during continuous charging and discharging. Thermal expansion of the battery cell is likely to cause damage to the housing, which in turn seriously affects performance and the service life of the battery.

### SUMMARY

An embodiment of the present disclosure provides a housing assembly for a battery cell, a battery cell, a battery, and an electrical device, capable of effectively improving pressure resistance and air tightness of the housing assembly.

In a first aspect, a housing assembly for a battery cell is provided according to embodiments of the present disclosure. The housing assembly for the battery cell includes a housing body and housing cover. The housing body has an opening. The housing cover is arranged at the opening. Each of the housing cover and the housing body has a rough region on surfaces of the housing cover and the housing body fiting each other.

In the above technical solution, by arranging the rough region on the surface of the housing cover and the surface of the housing body fitting each other, friction force between the housing cover and the housing body can be increased. When an internal pressure of the housing assembly increases, deformation and sliding of the housing cover can be suppressed using the friction force, which improves reliability of the engagement between the housing cover and the housing body, thereby increasing the pressure resistance of the housing assembly and effectively improving the air tightness of the housing assembly. It also helps to eliminate a need for a thicker sealing structural member to improve the air tightness and the pressure resistance, thereby saving space and increasing energy density of the battery cell.

In some embodiments, the rough region includes a first region formed on the housing body. The first region has a greater roughness than a remaining region of the housing body other than the first region.

In the above technical solution, the roughness of the first region is greater than the roughness of the remaining region on the housing body other than the first region. By increasing the local roughness of the housing body, reliability of the engagement between the housing body and the housing cover can be increased.

In some embodiments, a sealing member is arranged between the housing cover and the housing body. The first region is located at a position of the housing body facing the sealing member.

In the above technical solution, with the sealing member arranging between the housing cover and the housing body, and the first region being located on the part of the housing body facing the sealing member, friction force between the housing body and the sealing member can be increased. The housing body and the sealing member are less prone to sliding, which can enhance sealing performance of the housing assembly.

In some embodiments, the rough region includes a second region on the housing cover. The second region has a greater roughness than a remaining region of the housing body other than the second region.

In the above technical solution, the roughness of the second region on the housing cover is greater than the roughness of the remaining regions on the housing cover other than the second region. By increasing the local roughness of the housing cover, the reliability of the engagement between the housing cover and the housing body can be increased.

In some embodiments, a sealing member is arranged between the housing cover and the housing body. The second region is located at a position of the housing cover facing the sealing member.

In the above technical solution, by arranging the sealing member between the housing cover and the housing body, and locating the second region on the part of the housing cover facing the sealing member, friction between the housing cover and the seal. The housing cover and the sealing member are less prone to sliding, which can enhance the sealing performance of the housing assembly.

In some embodiments, the housing body includes a peripheral wall portion and an end wall portion connected to an axial end of the peripheral wall portion. The end wall portion abuts against an axial outer side of an outer edge portion of the housing cover. The rough region is located between the end wall portion and the outer edge portion.

In the above technical solution, with the end wall portion of the housing body abutting against the axial outer side of the outer edge portion of the housing cover, and the rough region being located between the end wall portion and the outer edge portion, friction force between the end wall portion and the outer edge portion can be increased with a suppression in sliding between the end wall portion and the outer edge portion. Therefore, pressure resistance strength of the housing assembly is increased while having simpler and more reliable mounting between the housing body and the housing cover.

In some embodiments, the rough region includes a first region on an inner surface of the end wall portion and/or a second region on an outer surface of the outer edge portion.

In the above technical solution, the rough region includes the first region on the inner surface of the end wall portion or the second region on the outer surface of the outer edge portion, both of which can increase the friction force between the end wall portion and the outer edge portion with the suppression in the sliding between the end wall portion and the outer edge portion. Therefore, the pressure resistance strength of the housing assembly is increased. The rough region includes the first region on the inner surface of the end wall portion and the second region on the outer surface of the outer edge portion, for roughening on the end wall portion and the outer edge portion is more effective in increasing friction force than roughening on either one of the end wall portion and the outer edge portion alone, and can better increase the pressure resistance strength of the housing assembly.

In some embodiments, a sealing member is arranged between the end wall portion and the outer edge portion.

In the above technical solution, with the sealing member arranging between the end wall portion and the outer edge portion, friction force between the end wall portion and the sealing member or friction force between the outer edge portion and the sealing member can be increased. Or the friction force between the end wall portion and the sealing member is increased simultaneously. The friction between the outer edge to enhance a sealing effect of the housing assembly.

In some embodiments, the housing cover further includes a protrusion. The outer edge portion surrounds the protrusion. The protrusion protrudes outward relative to the outer edge portion and extending into an inner annular region of the end wall portion.

In the above technical solution, the housing cover further includes the protrusion, the outer edge portion surrounds the protrusion, and the protrusion protrudes outward relative to the outer edge portion in a direction facing away from a center of the housing body and extends into the inner annular region of the end wall portion. The protrusion can increase expansion space of a housing of the battery cell, thereby increasing pressure resistance of the housing of the battery cell.

In some embodiments, the protrusion is provided with an explosion-proof pressure relief structure.

In the above technical solution, arranging the protrusion helps the explosion-proof pressure relief structure to achieve a reliable explosion-proof and pressure relief effect.

In some embodiments, the peripheral wall portion has an inner protrusion protruding along a radial direction of the housing body and abutting against an axial inner side of the outer edge portion.

In the above technical solution, the inner protrusion is arranged on the peripheral wall portion of the housing body, which protrudes in the radial direction of the housing body and abuts against the axial inner side of the outer edge portion. In this way, the friction force between the housing body and the housing cover is greater, and the housing cover is not easily pushed out due to expansion, resulting in a stronger connection between the housing body and the housing cover.

In some embodiments, the end wall portion of the housing body is formed by cold heading.

In the above technical solution, with the end wall portion of the housing body being formed by cold heading, a manufacturing process is simple and cannot cause an adverse thermal effect.

In some embodiments, an intermediate member is arranged at a position where the housing cover and the housing body fit each other. The sealing member is arranged between the intermediate member and the housing body and between the intermediate member and the housing cover. The rough region includes a third region on the intermediate member. The third region faces the sealing member. The third region has a greater roughness than an outer surface of the housing body and/or an inner surface of the housing cover.

In the above technical solution, the intermediate member is arranged at the position where the housing cover and the housing body fit each other, the sealing member is arranged between the intermediate member and the housing body and between the intermediate member and the housing cover, the rough region includes the third region on the intermediate member, the third region faces the sealing member, and the roughness of the third region is greater than the roughness of the outer surface of the housing body and/or the inner surface of the housing cover. The intermediate member can be directly roughened when the intermediate member is arranged, without roughening the housing body and the housing cover, which can simplify the manufacturing process of the housing body and the housing cover. Of course, the housing body and the housing cover can also be roughened simultaneously.

In some embodiments, the sealing member is made of a plastic sealing material.

In the above embodiment, the sealing member is made of the plastic sealing material, and the plastic sealing material has good sealing performance, good manufacturability, and low cost, which can improve the reliability of the engagement between the housing body and the housing cover and save space.

In a second aspect, a battery cell is provided. The battery cell includes an electrode assembly and the housing assembly for the battery cell described above. The electrode assembly is arranged in the housing assembly.

In a third aspect, a battery is provided. The battery includes a plurality of battery cells described above.

In a fourth aspect, an electrical device is provided. The electrical device includes the battery described above.

### BRIEF DESCRIPTION OF THE DRAWINGS

In order to clearly explain technical solutions of embodiments of the present disclosure, drawings used in the embodiments are briefly described below. It should be understood that the drawings as described below merely illustrate some embodiments of the present disclosure, and should not be construed as limiting the scope. Based on these drawings, other drawings can be obtained by those skilled in the art without creative effort.
FIG. 1 is a schematic structural view of a vehicle according to some embodiments of the present disclosure.
FIG. 2 is an exploded view of a structure of a battery according to some embodiments of the present disclosure.
FIG. 3 is a schematic structural view of a housing assembly for a battery cell according to an embodiment of the present disclosure.
FIG. 4 is an exploded view of a structure of a housing assembly for a battery cell according to some embodiments of the present disclosure.
FIG. 5 is a exploded view of a structure of a vehicle according to some other embodiments of the present disclosure.
FIG. 6 is a schematic structural view of a housing assembly for a battery cell according to yet some other embodiments of the present disclosure.
FIG. 7 is a schematic structural view of a housing assembly for a battery cell according to still yet some other embodiment of the present disclosure.

Reference numerals: 10000-vehicle; 1000-battery; 2000-controller; 3000-motor; 100-battery cell; 200-case; 201-first case body; 202-second case body; 10-housing body; 101 - peripheral wall portion; 102-end wall portion; 103-inner protrusion; 104-opening; 11-housing cover; 111-protrusion; 112-outer edge portion; 13-first region; 14-second region; 15-sealing member; 16-intermediate member; 17-third region; 20-rough region; 30-housing assembly.

### DETAILED DESCRIPTION

In order to make objects, technical solutions, and advantages of the present disclosure more apparent, technical solutions according to embodiments of the present disclosure will be described clearly and completely below with reference to the accompanying drawings of the embodiments of the present disclosure. Obviously, the embodiments described below are only a part of the embodiments of the present disclosure, rather than all embodiments of the present disclosure. On a basis of the embodiments of the present disclosure, all other embodiments obtained by those skilled in the art without creative labor shall fall within the protection scope of the present disclosure.

Unless otherwise defined, all technical and scientific terms used herein have the same meaning as commonly understood by those skilled in the art of the present disclosure. Terms in the specification of the present disclosure herein are only used for the purpose of describing specific embodiments, and are not intended to limit the present disclosure. In addition, the terms "including" and "having" and any variants thereof as used in the description of the embodiments of the present disclosure, the appended claims, and the above accompanying drawings are intended to cover non-exclusive inclusions. Terms "first", "second", etc. in the embodiments of the present disclosure, the appended claims, and the above accompanying drawings are not intended for the description of a specific order or a priority relationship, but rather distinguish different objects.

Reference herein to "an embodiment" means that a particular feature, structure or characteristic described in combination with the embodiment can be included in at least one embodiment of the present disclosure. The appearance of this phrase in various places in the specification are not necessarily all referring to the same embodiment, nor is it an independent or alternative embodiment that is mutually exclusive of other embodiments.

In the description of the embodiments of the present disclosure, unless specified or limited otherwise, the technical terms "mounted," "connected," "coupled" and "fixed" are understood broadly, such as a fixed connection or a detachable connection or connection as one piece; mechanical connection or electrical connection; direct connection or indirect connection through an intermediate; internal communication of two components. For those skilled in the art, the specific meaning of the above-mentioned terms in the embodiments of the present disclosure can be understood according to specific circumstances.

Terms "and/or" in the present disclosure describes an association relationship between correlated objects, including three relationships. For example, "A and/or B" can mean A only, B only, or both A and B. In addition, the symbol "/" in the present disclosure generally indicates an "or" relationship between the correlated objects preceding and succeeding the symbol.

In the embodiments of the present disclosure, the same reference numerals represent the same components, and detailed descriptions of the same components in different embodiments are omitted for the sake of simplicity. It should be understood that a thickness, a length, a width, and other dimensions of various components in the embodiments of the present disclosure, as well as an overall thickness, length, width, and other dimensions of an integrated device illustrated in the drawings, are only exemplary illustrations and should not constitute any limitation to the present disclosure.

In the present disclosure, "plurality of" means two or more, including two.

In the present disclosure, a battery cell may include a lithium ion secondary battery, a lithium ion primary battery, a lithium sulfur battery, a sodium lithium ion battery, a sodium ion battery or a magnesium ion battery, etc., which are not limited in the embodiments of the present disclosure. The battery cell may be in a shape of a cylinder, a flat body, a cuboid or other shapes, which are not limited in the embodiments of the present disclosure. The battery cell is generally divided into three types based on a packaging method: a cylinder-shaped battery cell, a square-shaped battery cell, and a soft-pack battery cell, which are not limited in the embodiments of the present disclosure.

The battery mentioned in the embodiments of the present disclosure refers to a single physical module including one or more battery cells to provide a higher voltage and capacity. For example, the battery mentioned in the present disclosure may include a battery module or a battery pack. The battery generally includes a case for packaging one or more battery cells or a plurality of battery modules. The case can prevent liquid or other foreign matters from affecting charging or discharging of the battery cell. Alternatively, the battery mentioned in the present disclosure may not include the above-mentioned case, and details thereof are not repeated herein.

The battery cell may include a housing, an electrode assembly, and an electrolyte. The housing is configured to accommodate the electrode assembly, and the electrolyte. The electrode assembly consists of a positive electrode plate and a negative electrode plate. Operation of the electrode assembly primarily relies on a movement of metallic ions between the positive and negative electrode plates. The positive electrode plate includes a positive electrode current collector and a positive electrode active material layer. The positive electrode active material layer is coated at a surface of the positive electrode current collector. A part of the positive electrode current collector that is not coated with the positive electrode active material layer protrudes from a part that has been coated with the positive electrode active material layer. The part that is not coated with the positive active material layer serves as a positive electrode tab. A lithium-ion battery is taken as an example, a material of a positive electrode current collector may be aluminum, and a positive electrode active material may be lithium cobalt oxide, lithium iron phosphate, ternary lithium, lithium manganate, etc. A negative electrode plate includes a negative electrode current collector and a negative electrode active material layer. The negative electrode active material layer is coated at a surface of the negative electrode current collector. A part of the negative electrode current collector that is not coated with the negative electrode active material layer protrudes from a part that has been coated with the negative electrode active material layer. The part that is not coated with the negative electrode active material layer serves as a negative electrode tab. A material of the negative electrode current collector may be copper, and a negative electrode active material may be carbon, silicon, etc. To ensure no fusing during passing through a high current, a plurality of positive electrode tabs is provided and stacked together, and a plurality of negative electrode tabs is provided and stacked together.

A material of the separator may be Polypropylene (PP), Polyethylene (PE), etc. In addition, the electrode assembly may have a winding structure or a laminated structure, and the embodiments of the present disclosure are not limited thereto.

In recent years, new energy vehicles have developed by leaps and bounds. In the field of electric vehicles, power batteries, as the power source of electric vehicles, play an important and irreplaceable role. Batteries, as the core components of the new energy vehicles, have high requirements in terms of safety and service life.

It was found that in a general power battery, in order to obtain sufficient power from the battery, a plurality of battery cells are usually arranged to be stacked to each other. However, the battery cell generates a large amount of heat during continuous charging and discharging, which causes an internal temperature of the battery cell to rise. And the structure of stacking the plurality of battery cells aggravates this phenomenon. Due to weak pressure resistance of the battery cell, internal heat expansion of the battery cell causes damage to the housing of the battery cell, which seriously affects the performance and the service life of the battery cell.

Based on the above considerations, in order to solve the weak pressure resistance problem of the housing of the battery cell, a housing assembly for a battery cell is provided after in-depth research. The housing assembly for a battery cell includes a housing body and a housing cover. The housing body has an opening. The housing cover is arranged at the opening. Each of the housing cover and the housing body has a rough region on surfaces of the housing cover and the housing body fiting each other to increase friction force between the housing cover and the housing body. The friction force increases as an internal pressure of the housing assembly increases. Thus, deformation and sliding of the housing cover can be suppressed, which improves reliability of the engagement between the housing cover and the housing body, and advances the air tightness of the housing assembly and the pressure resistance of the housing assembly. As a result, damage to the housing assembly caused by the expansion of the battery cell is avoided, which improves safety and the service life of the battery cell.

In addition, due to the arrangement of the rough region, the pressure resistance and the air tightness of the housing assembly can be improved. Therefore, in some embodiments, a sealing ring structure can be omitted compared with the existing technology. On the one hand, a packaging speed can be improved, a packaging yield rate can be improved, and production cost can be reduced. On the other hand, space occupied by the sealing ring structure is saved, thereby increasing an effective volume within the housing assembly, thus ensuring the pressure resistance performance of the battery cell while increasing energy density of the battery cell.

The batteries disclosed in the embodiments of the present application can be used in, but are not limited to, electrical devices such as vehicles, ships, or aircrafts. The power supply system for the electrical device can be composed of the battery disclosed in the present disclosure, which helps to improve applicable ranges of the battery.

The embodiments of the present disclosure provide an electrical device that uses a battery as a power supply. The electrical device may be, but is not limited to, a mobile phone, a tablet, a laptop, an electric toy, an electric tool, a battery car, an electric vehicle, a ship, a spacecraft, etc. The electric toy can include a fixed or mobile electric toy, such as a game console, an electric car toy, an electric ship toy, an electric airplane toy, etc. The spacecraft can include an airplane, a rocket, a space shuttle, a spaceship, etc.

For convenience of explanation in the following embodiments, an electrical device according to an embodiment of the present disclosure is described using a vehicle as an example.

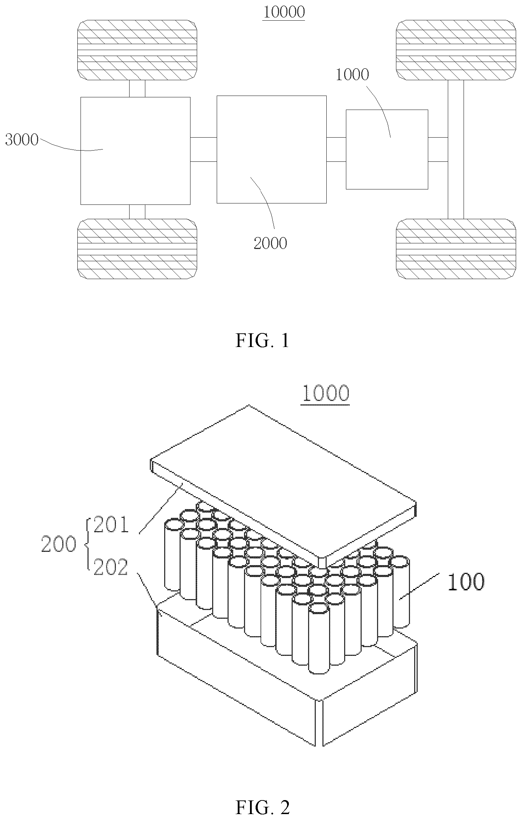

Referring to FIG. 1, FIG. 1 is a schematic structural view of a vehicle 10000 according to some embodiments of the present disclosure. The vehicle 10000 may be a fuel vehicle, a gas vehicle, or a new energy vehicle. The new energy vehicle may be a pure electric vehicle, a hybrid vehicle, an extended-range vehicle, etc. The vehicle 10000 is provided with a battery 1000 internally. The battery 1000 may be disposed at a bottom, a head, or a tail of the vehicle 100000. The battery 1000 may be configured to supply power to the vehicle 10000. For example, the battery 1000 may serve as an operating power source for the vehicle 10000. The vehicle 10000 may also include a controller 2000 and a motor 3000. The controller 2000 is configured to control the battery 1000 to supply power to the motor 3000, for example, to meet operational power consumption requirements for starting, navigation, and driving of the vehicle 10000.

In some embodiments of the present disclosure, the battery 1000 can not only serve as an operating power supply for the vehicle 10000, but also can serve as a drive power supply for the vehicle 10000 to replace or partially replace fuel or natural gas to provide driving power for the vehicle 10000.

Referring to FIG. 2, FIG. 2 is an exploded view of a structure of a battery 1000 according to some embodiments of the present disclosure. The battery 1000 includes a case 200 and a plurality of battery cells 100 accommodated in the case 200. the case 200 is configured to provide a fitting space for the battery cell 100, and the case 200 a variety of structures. In some embodiments, the case body 200 may include a first case body 201 and a second case body 202. The first case body 201 and the second case body 202 fit with each other. A fitting space configured to accommodate the battery cell 100 is defined by the first case body 201 and the second case body 202 jointly. The second case body 202 may have a hollow structure with one end open, and the first case body 201 may be a plate-like structure. The first case body 201 covers an open side of the second case body 202 to allow the first case body 201 and the second case body 202 to jointly define the fitting assembly space. Each of the first case body 201 and the second case body 202 may also be a hollow structure with one side open, and the open side of the first case body 201 covers the open side of the second case body 202. Of course, the case 200 formed by the first case body 201 and the second case body 202 may be in various shapes, such as a cylinder, a cuboid, etc.

In the battery 1000, a plurality of battery cells 100 may be connected in series, in parallel, or in series and parallel. The expression "in series and parallel" means that the plurality of battery cells 100 is connected both in series and in parallel. The plurality of battery cells 100 may be directly connected in series, or in parallel, or in series and parallel, and then a whole composed of the plurality of battery cells 100 may be accommodated in the case 200. Of course, the battery 1000 may also be in a form where the plurality of battery cells 100 is first connected in series or in parallel or in series and parallel to compose the battery module, the plurality of battery modules is then connected in series or in parallel or in series and parallel to form a whole, and the whole is accommodated in the case 200. The battery 1000 may also include other structures. For example, the battery 1000 may further include a busbar configured for an electrical connection between the plurality of battery cells 100.

For convenience of explanation in the following embodiments, a housing assembly 30 for a battery cell 100 according to an embodiment of the present disclosure is taken as an example for illustration.

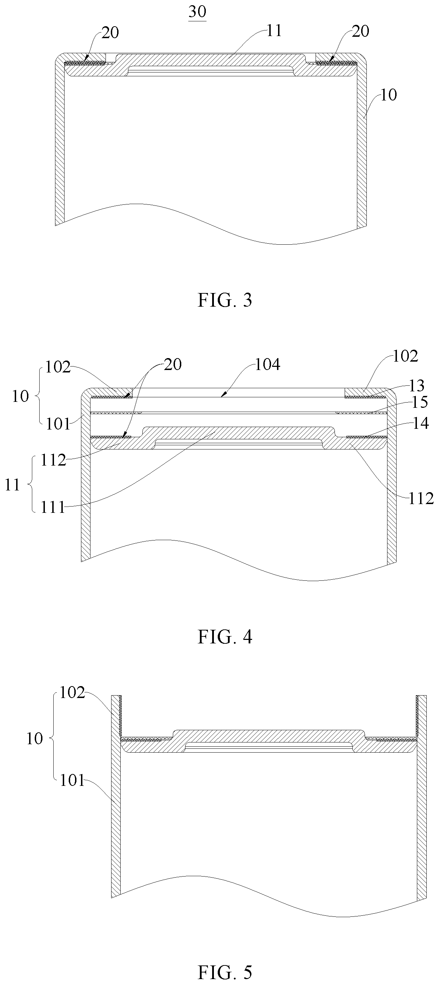

Referring to FIGS. 3 and 4, FIG. 3 is a schematic structural view of a housing assembly 30 for a battery cell 100 according to an embodiment of the present disclosure. The housing assembly 30 includes a housing body 10 and a housing cover 11. The housing body 10 has an opening 104. The housing cover 11 is arranged at the opening 104 to close the opening 104.

Each of the housing cover 11 and the housing body 10 has a rough region 20 on surfaces of the housing cover 11 and the housing body 10 fiting each other, and the rough region 20 can increase friction force between the housing cover 11 and the housing body 10. The rough region 20 can increase the friction between the housing cover 11 and the housing body 10. The friction force increases as an internal pressure of the housing assembly 30 increases. Thus, the deformation, sliding, etc. of the housing cover 11 can be effectively suppressed, which improves the reliability of the engagement between the housing cover 11 and the housing body 10, and advances overall air tightness of the housing assembly 30 and pressure resistance performance of the body assembly 30. As a result, damage to the case assembly 30 due to expansion of the battery cell 100 is avoided, which improves the safety and the service life of the battery cell.

In addition, since the rough region 20 is provided, the pressure resistance and the air tightness of the housing assembly 30 can be improved. Therefore, in some embodiments, the sealing ring structure can be omitted compared with the existing technology. Thus, a packaging speed and a packaging yield rate can be improved, and production cost can be reduced. Moreover, space occupied by the sealing ring structure is saved, thereby increasing an effective volume within the housing assembly 30, thus ensuring the pressure resistance performance of the battery cell 100 while increasing energy density of the battery cell 100.

Of course, the present disclosure is not limited thereto. In other embodiments of the present disclosure, if the space is sufficient, a sealing ring structure may also be provided, which is not limited herein.

It is worth noting that the rough region 20 is located on the surface of the housing cover 11 and the surface of the housing body 10 fitting each other, which is to be understood in a broad sense, that is, the rough region 20 is located on a position where the housing cover 11 and the housing body 10 fit each other and on a surface of the housing cover 11 and a surface of the housing body 10 fit each other, but it is not limited to which component surface it is mounted on. For example, the rough region 20 may be arranged on the housing cover 11, or on the housing body 10, or on other components between the housing cover 11 and the housing body 10, which is not limited herein. However, as long as the rough region 20 is arranged between a position where the housing cover 11 and the housing body 10 fit each other and on a surface of the housing cover 11 and a surface of the housing body 10 fitting each other, the friction force between the housing cover 11 and the housing body 10 can be increased. Therefore, the reliability of the engagement between the housing cover 11 and the housing body 10 is further increased. Thus, pressure-resistant capability of the housing assembly 30 is improved.

In some embodiments, referring to FIGS. 3 and 4 , the rough region 20 includes a first region 13 formed on the housing body 10. The first region 13 has a greater roughness than a remaining region of the housing 10 other than the first region 13. Therefore, by increasing the local roughness of the housing body 10, the reliability of the engagement between the housing cover 11 and the housing body 10 can be increased, and rough processing is facilitated, shorting a rough processing time. And the rough region 20 can be arranged specifically for the housing body 10, which has a wide range of applications.

It can be understood that since the rough region 20 is located on the surface of the housing cover 11 and the surface of the housing body 10 fitting each other, the first region 13 is located on a side of the housing body 10 facing the housing cover 11.

Of course, the present disclosure is not limited thereto. For example, in other embodiments of the present disclosure, the entire housing body 10 may also be roughened, such that the side of the housing body 10 facing the housing cover 11 has a rough region 20.

In some embodiments, as illustrated in FIGS. 3 and 4, a sealing member15 is arranged between the housing cover 11 and the housing body 10, and the first region 13 is located at a position of the housing body 10 facing the sealing member15. The rough first region 13 has a better ability to bond with the sealing member 15, which can increase friction force between the housing 10 and the sealing member 15. The housing 10 and the sealing member 15 are less prone to sliding, which can enhance air tightness of the housing assembly 30.

In some embodiments, referring to FIGS. 3 and 4, the rough region 20 includes a second region 14 formed on the housing cover 11. The second region 14 has a greater roughness than a remaining region on the housing cover 11 other than the second region 14. Therefore, by increasing the local roughness of the housing cover 11, the reliability of the engagement between the housing cover 11 and the housing body 10 can be increased, and rough processing is facilitated, shorting a rough processing time. And the rough region 20 can be arranged specifically for the housing cover 11, which has a wide range of applications.

It can be understood that since the rough region 20 is located on the surface of the housing cover 11 and the surface of the housing body 10 fitting each other, the second region 14 is located on the side of the housing cover 11 facing the housing body 10.

Of course, the present disclosure is not limited to thereto. For example, in other embodiments of the present disclosure, the entire housing cover 11 may also be roughened, such that the side of the housing cover 11 facing the housing body 10 has a rough region 20.

In some embodiments, as illustrated in FIGS. 3 and 4, a sealing member 15 is arranged between the housing cover 11 and the housing body 10, and the second region 14 is located at a position of the housing cover 11 facing the sealing member 15. The rough second region 14 has a better ability to bond with the sealing member 15, which can increase friction force between the housing cover 11 and the sealing member 15. The housing cover 11 and the seal 15 are less prone to sliding, which can enhance the air tightness of the housing assembly 30.

In some embodiments, as illustrated in FIGS. 3 and 4, the housing body 10 includes a peripheral wall portion 101 and an end wall portion 102 connected to an axial end of the peripheral wall portion 101, and the end wall portion 102 abuts against an axial outer side of an outer edge portion 112 of the housing cover 11 (that is, on an axial side of the housing body 10 facing away from a central cross-section of the housing body 10). The rough region 20 is located between the end wall portion 102 and the outer edge portion 112, which can increase friction force between the end wall portion 102 and the outer edge portion 112. And a direction of the friction force has a more effective anti-slip effect, which can effectively suppress sliding between the end wall portion102 and the outer edge portion 112, and prevent the housing cover 11 from shooting out of the opening 104 of the housing body 10, thereby increasing the pressure resistance strength of the housing assembly 30. At the same time, the end wall portion 102 abuts against the axial outer side of the outer edge portion 112 of the housing cover 11, such that mounting between the end wall portion 102 and the housing cover 11 is simpler to simplify mounting steps, and the reliability of the engagement between the housing body 10 and the housing cover 11 can be improved. In an embodiment, the end wall portion 102 is in an annular shape.

In some embodiments, as illustrated in FIGS. 3 and 4, the roughen region 20 includes a first region 13 on an inner surface of the end wall portion 102 and/or a second region 14 on an outer surface of the outer edge portion 112.

In the above technical solution, the rough region 20 includes the first region 13 on the inner surface of the end wall portion 102 or the second region 14 on the outer surface of the outer edge portion 112, both of which can increase the friction force between the end wall portion 102 and the outer edge portion, with the suppression in the sliding between the end wall portion 102 and the outer edge portion 112. Therefore, the pressure resistance strength of the housing assembly 30 is increased. The rough region 20 includes the first region 13 on the inner surface of the end wall portion 102 and the second region 14 on the outer surface of the outer edge portion 112, for when roughening on both the end wall portion 102 and the outer edge portion 112 is more effective in increasing the friction force than greater than roughening on either one of the end wall portion 102 and the outer edge portion 112 alone, and can better increase the pressure resistance strength of the housing assembly 30.

In some embodiments, as illustrated in FIGS. 3 and 4, a sealing member 15 is arranged between the end wall portion 102 and the outer edge portion 112, and meanwhile, the rough region 20 is arranged between the end wall portion 102 and the outer edge portion 112, thereby effectively increasing the bonding force between the end wall portion 102 and the sealing member 15, or the bonding force between the outer edge portion 112 and the sealing member 15, or simultaneously increasing the bonding force between the end wall portion 102, the outer edge portion 112, and the sealing member 15. Thus, the air tightness and the pressure resistance of the housing assembly 30 are increased.

In some embodiments, as illustrated in FIGS. 3 and 4, the housing cover 11 further includes a protrusion 111, an outer edge portion 112 surrounds the protrusion 111, and the protrusion 111 protrudes outward relative to the outer edge portion 112 (i.e., in a direction facing away from a central cross-section of the housing 10 in an axial direction of the housing 10) and extends into an inner annular region of the end wall portion 102. The protrusion 111 can increase the expansion space within the housing assembly 30, thereby increasing the pressure resistance capability of the battery cell 100.

In some embodiments, the protrusion 111 is provided with an explosion-proof pressure relief structure, such as an explosion-proof valve or a weak portion, to have an explosion-proof and pressure-relief effect. Therefore, by arranging the protrusion 11 to extend into the inner annular region of the end wall portion102, the end wall portion 102 can be avoided from blocking the protrusion 11. And by arranging the explosion-proof and pressure relief structure on the protrusion 111, the explosion-proof and pressure relief function can be reliably and effectively achieved.

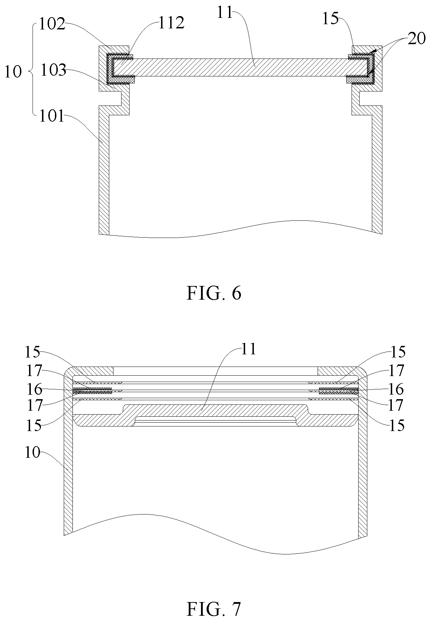

The present disclosure is not limited to thereto. For example, in other embodiments of the present disclosure, the protrusion 111 may not be provided. In this case, the housing cover 11 may be in a form of a flat plate (for example, as illustrated in FIG. 6 ) and the like. In addition, the protrusion 111 may not only be provided with an explosion-proof and pressure relief structure, but may also be provided with other structures such as a liquid injection valve and a pole, which are not repeated herein.

In some embodiments, as illustrated in FIGS. 3 and 4, the peripheral wall portion 101 has a constant cross-sectional shape. With the peripheral wall portion 101 having the constant cross-sectional shape, the accommodation space within the housing assembly 30 can be increased to accommodate a larger electrode assembly for increasing capacitance.

In an embodiment, the peripheral wall portion101 may have a cylindrical or cuboid shape. In this case, the axial direction of the housing body 10 may be an axial direction of a peripheral wall portion 101 of a cylindrical shape, or a length direction or a width direction of a peripheral wall portion 101 of a cuboid shape, or a direction perpendicular to the housing cover 11. A radial direction of the housing body 10 is a direction perpendicular to the axial direction of the housing 10.

In some embodiments, the end wall portion 102 of the housing body 10 is formed by cold heading. The manufacturing process is simple and requires few components, which can improve the sealing performance of the housing assembly 30. The cold heading requires no heating, is suitable for processing the battery cells 100, and has high safety.

In some other embodiments, as illustrated in FIG. 6, the peripheral wall portion 102 has an inner protrusion 103 (thus having a non-consistent cross-sectional shape) protruding along a radial direction of the housing body 10 and abutting against an axial inner side of the outer edge portion 112 (i.e., on an axial side of the housing body 10 close to a central cross-section of the housing body 10). In this way, the housing cover 11 is subject to more friction force and is less likely to be pushed out due to the internal expansion, to allow for a stronger connection between the housing cover 11 and the housing body 10.

In some embodiments, for the peripheral wall portion 101 of the housing body 10 having an inner protrusion 103, the end wall portion 102 and the inner protrusion 103 of the housing body 10 may also be formed by the cold heading. The manufacturing process is simple and requires few components, which can improve the sealing performance of the housing assembly 30. The cold heading requires no heating, is suitable for processing the battery cells 100, and has the high safety.

Referring to FIG. 7, in some embodiments, an intermediate member 16 is arranged at a position where the housing body 10 and the housing cover 11 fit each other. The sealing member 15 is arranged between the intermediate member 16 and the housing body 10 and between intermediate member 16 and the housing cover 11. The rough region 20 includes a third region 17 on the intermediate member 16. The third region 17 faces the sealing member 15. The third region 17 has a greater roughness than an outer surface of the housing body 10 and/or an inner surface of the housing cover 11.

Therefore, on the one hand, the arrangement of the intermediate member 16 can improve the pressure resistance strength of the housing assembly 30. On the other hand, direct roughening on the intermediate member 16 without roughening the housing body 10 and the housing cover 11 simplifies the manufacturing process of housing body 10 and housing cover 11.

However, the present disclosure is not limited thereto. In some other embodiments of the present disclosure, when the intermediate member 16 is arranged, a rough region may also be simultaneously arranged on parts of the housing cover 11 and the housing body 10 corresponding to the sealing member 15, such as the above first region 13 and/or the above second region 14, to further improve the air tightness and the pressure resistance.

In some embodiments, the sealing member 15 mentioned in any of the above embodiments may be made of a plastic sealing material. The plastic sealing material has a better bonding effect with the housing cover 11 and the housing body 10, has good sealing performance, is easy to operate, has low cost, and can improve the reliability of the connection between the housing body 10 and the housing cover 11.

It is worth mentioning that the plastic sealing material refers to a material that can be deformed by heat and recombine with adjacent components. The arrangement of the rough region 20 can improve thermal conductivity and shorten a hot-pressing time of the plastic sealing material. For example, in some examples, the sealing member 15 may be a sealant or the like, and therefore it is easy to obtain and use.

Moreover, by using the plastic sealing material to replace the sealing ring structure, the packaging speed and a packaging yield rate can be improved, and the production cost can be reduced. Furthermore, space occupied by the sealing ring structure is saved, thereby increasing an effective volume within the housing assembly 30, thus ensuring the pressure resistance performance of the battery cell 100 while increasing energy density of the battery cell 100.

For example, after the plastic sealing material member is arranged on the housing cover 11 or the housing body 10, the end wall portion 102 of the housing body 10 is processed to connect the housing body 10 and the housing cover 11. As a result, the connection between the housing cover 11 and the housing body 10 can be realized to ensure the air tightness and the pressure resistance.

The present disclosure provides embodiments in another aspect, which provides a battery cell 100. The battery cell 100 includes an electrode assembly and the housing assembly 30 of the battery cell 100 described above. The electrode assembly is arranged in the housing assembly 30.

In an embodiment, the electrode assembly may be mounted into the housing body 10 first, and then the housing cover 11 covers the housing body 10. After that, the cold heading is performed on the connection between the housing body 10 and the housing cover 11, to allow the housing body 10 and the housing cover 11 to be connected to each other.

The present disclosure provides embodiments in yet another aspect, which provides a battery 1000. The battery 1000 includes a plurality of battery cells 100 described above.

The present disclosure provides embodiments in still yet another aspect, which provides an electrical device. The electrical device includes the battery 1000 described above.

According to some embodiments of the present disclosure, a sealing member 15 is arranged between the housing body 10 and the housing cover 11, and a sealing connection structure is formed by the cold heading. A joint between the housing body 10 and the sealing member 15 is processed to form a roughened first region 13, and a joint between the housing cover 11 and the seal 15 is processed to form a roughened second region 14. The first region 13 and the second region 14 are used to more closely bond the housing body 10, the sealing member 15, and the housing cover 11 together, improving the air tightness of the overall structure. When gas is generated inside the housing assembly 30, greater friction force can be provided between the roughened first region 13 and the roughened second region 14, preventing the housing cover 11 from deforming and sliding, and improving the pressure resistance strength of the housing assembly 30. Thus, the pressure resistance capability of the battery cell 100 is effectively improved.

The sealing member 15 uses the plastic sealing material such as the sealant, and the roughening is performed on the parts of the housing cover 11 and the housing body 10 fitting each other, and therefore, compared with the existing technology that only uses the sealing ring structure, the bonding strength between housing cover 11 and the housing body 10 and the bonding strength between the housing body 10 and the sealing member 15 can be effectively enhanced to improve the air tightness of the housing assembly 30. At the same time, when a high pressing fails, the rough region can increase the friction force between the housing cover 11 and the housing body 10 to improve the pressure resistance performance of the battery cell 100. In addition, the housing cover 11 and the housing body 10 that have the rough region increase heat conduction efficiency with the plastic sealing material, shortening the processing time.

In addition, the sealing ring structure can be omitted compared with the existing technology, thereby increasing the packaging speed, improving the packaging yield rate, and reducing the cost. Furthermore, space occupied by the sealing ring structure is saved, thereby increasing the effective volume within the housing assembly 30, thus ensuring the pressure resistance performance of the battery cell 100 while increasing the energy density of the battery cell 100.

It should be noted that the embodiments of the present disclosure and features in the embodiments can be combined with each other without any conflict.

While the embodiments of the present disclosure have been described above, they are not intended to limit the present disclosure. For those skilled in the art, various changes and variations can be made to the present disclosure. Any modifications, equivalent substitutions, and improvements made within the spirit and principle of the present disclosure are to be encompassed by the scope of the claims of the present disclosure.

## Claims

1. A housing assembly for a battery cell, comprising:
a housing body having an opening; and
a housing cover arranged at the opening,
wherein each of the housing cover and the housing body has a rough region on surfaces of the housing cover and the housing body fiting each other.

2. The housing assembly for the battery cell according to claim 1, wherein the rough region comprises a first region formed on the housing body, the first region having a greater roughness than a remaining region of the housing body other than the first region.

3. The housing assembly for the battery cell according to claim 2, wherein a sealing member is arranged between the housing cover and the housing body, the first region being located at a position of the housing body facing the sealing member.

4. The housing assembly for the battery cell according to any one of claims 1 to 3, wherein the rough region comprises a second region on the housing cover, the second region having a greater roughness than the remaining region of the housing cover other than the second region.

5. The housing assembly for the battery cell according to claim 4, wherein a sealing member is arranged between the housing cover and the housing body, the second region being located at a position of the housing cover facing the sealing member.

6. The housing assembly for the battery cell according to any one of claims 1 to 5, wherein the housing body comprises a peripheral wall portion and an end wall portion connected to an axial end of the peripheral wall portion, the end wall portion abutting against an axial outer side of an outer edge portion of the housing cover, and the rough region being located between the end wall portion and the outer edge portion.

7. The housing assembly for the battery cell according to claim 6, wherein the rough region comprises a first region on an inner surface of the end wall portion and/or a second region on an outer surface of the outer edge portion.

8. The housing assembly for the battery cell according to claim 6 or 7, wherein a sealing member is arranged between the end wall portion and the outer edge portion.

9. The housing assembly for the battery cell according to any one of claims 6 to 8, wherein the housing cover further comprises a protrusion, the outer edge portion surrounding the protrusion, and the protrusion protruding outward relative to the outer edge portion and extending into an inner annular region of the end wall portion.

10. The housing assembly for the battery cell according to claim 9, wherein the protrusion is provided with an explosion-proof pressure relief structure.

11. The housing assembly for the battery cell according to any one of claims 6 to 10, wherein the peripheral wall portion has an inner protrusion, the an inner protrusion protrudingalong a radial direction of the housing body and abutting against an axial inner side of the outer edge portion.

12. The housing assembly for the battery cell according to any one of claims 6 to 11, wherein the end wall portion of the housing body is formed by cold heading.

13. The housing assembly for the battery cell according to any one of claims 1 to 12, wherein an intermediate member is arranged at a position where the housing cover and the housing body fit each other, a sealing member being arranged between the intermediate member and the housing body and between the intermediate member and the housing cover, the rough region comprising a third region on the intermediate member, the third region facing the sealing member, and the third region having a greater roughness than an outer surface of the housing body and/or an inner surface of the housing cover.

14. The housing assembly for the battery cell according to any one of claims 3, 5, 8, and 13, wherein the sealing member is made of a plastic sealing material.

15. A battery cell, comprising:
an electrode assembly; and
the housing assembly for the battery cell according to any one of claims 1 to 14,
wherein the electrode assembly being arranged in the housing assembly.

16. A battery, comprising a plurality of battery cells according to claim 15.

17. An electrical device, comprising the battery according to claim 16.
